# EUROPÄISCHE PATENTANMELDUNG

(11) **EP 4 212 488 A1**
(43) Veröffentlichungstag der Anmeldung: **19.07.2023**
(21) Anmeldenummer: 22151954.9
(22) Anmeldetag: 18.01.2022
(51) Int. Cl.: C03B 37/012

(54) **VERFAHREN UND HALBZEUG ZUR HERSTELLUNG EINER MEHRKERNFASER**

(71) Anmelder: Heraeus Quarzglas GmbH & Co. KG, 63450 Hanau (DE)
(72) Erfinder: Dr. Lorenz, Michael, 06803 Bitterfeld-Wolfen (DE); Dr. Schuster, Kay, 06803 Bitterfeld-Wolfen (DE); Dr. Tiess, Tobias, 06803 Bitterfeld-Wolfen (DE)
(74) Vertreter: Heraeus IP

(57) **Zusammenfassung**

Ein bekanntes Verfahren zur Herstellung einer Mehrkernfaser mit randnaher Markerzone umfasst einen Verfahrensschritt, bei dem ein Bauteil-Ensemble zu der Mehrkernfaser oder zu einer Vorform für die Mehrkernfaser umgeformt wird, wobei das Bauteil-Ensemble aufweist: einen eine Zylinder-Längsachse 2 und eine Außenmantelfläche aufweisenden Zylinder 1, der einen Mantelglasbereich 1a aus Mantelglas aufweist, mehrere mit einem Kernglas belegte und sich in Richtung der Zylinder-Längsachse 2 erstreckende Kernglasbereiche 7a, die von dem Mantelglas umgeben sind, und mindestens ein sich in Richtung der Zylinder-Längsachse erstreckendes Markerelement 6. Um hiervon ausgehend ein Verfahren zur Herstellung von Mehrkernfasern mit randnaher Markerzone anzugeben, bei dem die Gefahr von Ausschuss vermindert ist, wird vorgeschlagen, dass das Markerelement 6 an der Außenmantelfläche 4 des Mantelglas-Zylinders angeordnet wird.

## Beschreibung

### Technischer Hintergrund

Die vorliegende Erfindung betrifft ein Verfahren zur Herstellung einer Mehrkernfaser, umfassend einen Verfahrensschritt, bei dem ein Bauteil-Ensemble zu der Mehrkernfaser oder zu einer Vorform für die Mehrkernfaser umgeformt wird, wobei das Bauteil-Ensemble aufweist:
- einen eine Zylinder-Längsachse und eine Außenmantelfläche aufweisenden Zylinder, der einen Mantelglasbereich aus Mantelglas aufweist,
- mehrere mit einem Kernglas belegte und sich in Richtung der Zylinder-Längsachse erstreckende Kernglasbereiche, die von dem Mantelglas umgeben sind,
- und mindestens ein sich in Richtung der Zylinder-Längsachse erstreckendes Markerelement.

Außerdem betrifft die Erfindung ein Halbzeug zur Herstellung einer Mehrkernfaser, mit einem eine Zylinder-Längsachse und eine Außenmantelfläche aufweisenden Mantelglas-Zylinder, der einen Mantelglasbereich aus Mantelglas aufweist, in dem mehrere Öffnungen zur Aufnahme von Kernstäben aus einem Kernglas enthalten sind.

Bei Mehrkernfasern sind mehrere lichtwellenleitende, optische Kernbereiche (im Folgenden auch als "Signalkerne" bezeichnet) in einer gemeinsamen Faser integriert. Die Signalkerne erstrecken sich entlang der Faserlängsachse. Sie sind von Mantelmaterial mit geringerem Brechungsindex umgeben und ermöglichen eine im Wesentlichen voneinander unabhängige Lichtführung. Dieses Faser-Design verspricht eine hohe Kapazität der Signalübertragung, weil in einer einzigen optischen Faser zusammengefasst unterschiedliche Signale simultan in jedem der räumlich getrennten Signalkerne übertragen werden können. Diese Methode der Signalübertragung wird auch als "räumliches Multiplexing" bezeichnet, was insbesondere die Daten-Übertragungskapazität in der optischen Telekommunikation erhöhen kann. Mehrkernfasern gelten außerdem als Schlüsselkomponenten zur Übertragung von Energie zur Materialbearbeitung, als Bestandteil faseroptischer Sensoren in der Messund Medizintechnik sowie für Beleuchtungs- und Abbildungszwecke in mikroskopischen oder endoskopischen Geräten.

### Stand der Technik

Mehrkernfasern werden durch Elongieren einer massiven Vorform oder eines Ensembles von Bauteilen erzeugt. Diese bestehen häufig aus synthetisch erzeugtem Quarzglas (SiO₂), das dotiert oder undotiert sein kann. Die Herstellung von synthetischem Quarzglas umfasst beispielsweise Plasma- oder CVD-Abscheidemethoden, die unter den Bezeichnungen OVD-, VAD-, MCVD-, PCVD- oder FCVD-Verfahren bekannt sind. Dabei wird eine flüssige oder gasförmige siliziumhaltige Ausgangssubstanz einer chemischen Reaktion (Hydrolyse, Pyrolyse oder Oxidation) unterzogen und das Reaktionsprodukt - teilchenförmiges SiO₂ - als Feststoff aus der Gasphase auf einer Ablagerungsfläche abgeschieden. Die Ausgangssubstanz ist beispielsweise Siliciumtetrachlorid (SiCl₄) oder eine chlorfreie Siliziumverbindung wie etwa ein Polyalkylsiloxan. Die Reaktionszone ist beispielsweise eine Brennerflamme ein Lichtbogen (Plasma) oder ein Ofen.

Beim sogenannten "Stack-and-Draw-Verfahren" werden Kernstäbe und Glaszylinder unterschiedlicher Durchmesser so zusammengestapelt, dass sie eine relativ hohe Packungsdichte und eine gewisse Symmetrie ergeben. Die zylinderförmigen Bauteile werden in ein Hüllrohr eingeführt und darin räumlich fixiert. Dieses Ensemble wird zu der Mehrkernfaser gezogen oder es wird vorab zu einer Vorform weiterverarbeitet, aus der anschließend die Mehrkernfaser gezogen wird.

Das "Stack-and-Draw-Verfahren" erfordert einen hohen Justageaufwand und es führt leicht zu Maßhaltigkeitsfehlern und zum Eintrag von Verunreinigungen infolge des großen Anteils freier Bauteil-Oberflächen. Zudem weist die elongierte Vorform wegen Unterschieden in der radialen Packungsdichte häufig unterschiedliche Radiuswerte in azimutaler Richtung auf, die durch Rundschleifen ausgeglichen werden müssen.

Bei den aus der US 2015/284286 A1 und aus der US 2015/0307387 A1 bekannten Verfahren wird als Mantelglas-Zylinder ein nach dem OVD-Verfahren erzeugter Sootkörper auf Basis von SiO₂ verwendet (SiO₂-Sootkörper), der eine Dichte zwischen 0,8 g/cm³ und 1,6 g/cm³ aufweist. Beim OVD-Verfahren ist die Ablagerungsfläche im Allgemeinen die Außenmantelfläche eines um seine Längsachse rotierenden stab- oder rohrförmigen Abscheidedorns. Durch reversierende Hin- und Herbewegung der Reaktionszone wird ein im Wesentlichen zylinderförmiger Sootkörper abgeschieden. Nach Abschluss des Abscheideprozesses wird der Abscheidedorn entfernt, so dass eine zentrale Durchgangsöffnung in der Mittelachse des zylinderförmigen Sootkörpers verbleibt. In den so erzeugten Mantelglas-Hohlzylinder werden Längsbohrungen zur Aufnahme von Kernglasstäben eingebracht, wobei die im Vergleich zu Quarzglas geringere Dichte des SiO₂-Sootkörpers die Herstellung maßgenauer Längsbohrungen erleichtert. Die herstellungsbedingt verbleibende zentrale "OVD-Durchgangsöffnung" kann beim Kollabieren zu asymmetrischen Verformungen führen und das Faser-Design zerstören. Außerdem verringert sich durch das Kollabieren die Querschnittsfläche des Mantelglasanteils. Diese Nachteile können durch Einsetzen eines die OVD-Durchgangsöffnung verschließenden Bauteils vermieden werden. Dabei kann es sich beispielsweise um einen Kernstab oder um einen Füllstab handeln. Der Füllstab besteht aus Glas, das im Wesentlichen den gleichen Brechungsindex hat wie der Mantelglas-Hohlzylinder. Der Füllstab kann ebenfalls durch ein OVD-Verfahren oder durch Pressformen oder durch eine Kombination aus Pressformen und OVD-Verfahren hergestellt werden. Außerdem wird in den Mantelglas-Hohlzylinder ein Kanal zur Aufnahme eines Markerelements eingebracht. Der Kanal wird im randnahen Bereich des Mantelglas-Hohlzylinders durch mechanisches Bohren erzeugt.

Die Markerelemente bilden in der Mehrkernfaser durchgängige, linienartige Markerzonen und dienen zur Symmetriebrechung um die Signalkerne sowie deren Positionen zueinander und in Bezug auf die Faser-Mittelachse eindeutig zu identifizieren und einander eindeutig zuordnen zu können. Dies ist beispielsweise erforderlich, damit zwei Mehrkernfasern über ihre Stirnseiten mittels herkömmlicher Spleißmethoden dämpfungsarm zusammengefügt werden können.

Zum Spleißen der Mehrkernfaser werden die zu verbindenden Faserenden so angeordnet, dass ihre Stirnseiten einander zugewandt sind. Bei einer bekannten Methode wird am gegenüberliegenden Faserende in alle Signalkerne gleichzeitig Licht eingespeist, und am Faserende der anderen Mehrkernfaser kollektiv mittels Fotodetektor und Leistungsmesser erfasst. Insbesondere in Fällen, bei denen das eine Ende der Mehrkernfaser zur Lichteinspeisung nicht verfügbar ist, wird diese Mehrkernfaser seitlich mit Licht durstrahlt. Durch Relativ-Verschiebung der Mehrkernfaser-Stirnseiten in horizontaler und vertikaler Richtung und durch RelativVerdrehung in azimutaler Richtung werden die Faserenden in einer Fusionsspleißmaschine automatisiert solange zueinander ausgerichtet, bis die Signalkerne einander richtig zugeordnet sind und die kollektive empfangene Lichtleistung maximal wird und dann in dieser Position miteinander verschmolzen.

Dieses Spleißverfahren setzt voraus, dass die Mehrkernfaser im Voraus - beispielsweise in einer Fabrik gespleißt wird. Um ein einfaches Spleißen von Mehrkernfasern am Verlegungsort zu ermöglichen, schlägt die US 9,541,707 B2 ein Design der Mehrkernfaser vor, bei der mehrere Signalkerne in einem Mantelglasbereich angeordnet sind, und bei der eine Markierungszone auf der Außenmantelfläche der Mehrkernfaser freiliegt. Das besondere Charakteristikum dieses Faser-Designs wird im Folgenden auch als "randnahe Markerzone" bezeichnet.

Zur Herstellung der Mehrkernfaser mit randnaher Markerzone wird eine Vielzahl von Durchgangsbohrungen in einem Mantelglas-Zylinder erzeugt, die in Richtung der Zylinderlängsachse verlaufen. Und zwar mehrere Kernstab-Bohrungen und eine Markerstab-Bohrung. Die Markerstab-Bohrung liegt dabei möglichst dicht an der Außenmantelfläche des Mantelglas-Zylinders. In die Kernstab-Bohrungen wird jeweils ein Kernstab eingesetzt und in die Markerstab-Bohrung ein Markerstab. Anschließend wird der Außenumfang des Mantelglas-Zylinders soweit abgeschliffen, bis ein Teil des Markerstabes freigelegt ist. Aus dem so vorbereiteten Bauteil-Ensemble wird die Mehrkernfaser gezogen, an deren Oberfläche die Markerzone freiliegt.

### Technische Aufgabe

Der Mantelglas-Zylinder ist langgestreckt. Die Durchgangslöcher haben daher ein großes Aspektverhältnis (Verhältnis von Länge und Durchmesser), was grundsätzlich deren maßgenaue Fertigung und exakte Ausrichtung parallel zur Längsachse des Mantelglas-Zylinders erschwert.

Je größer die Anzahl an Mehrfachkernen ist, umso größer ist theoretisch die Zunahme der Daten-Übertragungskapazität im Vergleich zu einem Lichtwellenleiter mit einem einzigen Faserkern (Einzelmodenfaser oder Mehrmodenfaser). Andererseits besteht grundsätzlich die Anforderung, dass jeder der Mehrfachkerne eine optische Dämpfung hat, die in etwa der eines Lichtwellenleiters mit Einzelkern entspricht. Dies erfordert, dass das Faserdesign keine zusätzliche Dämpfung verursacht, oder die unabhängige Informationsübertragung der Signalkerne als Störsignal beeinträchtigt. Dies kann aber durch ein sogenanntes "Übersprechen" zwischen den Mehrfachkernen insbesondere dann verursacht werden, wenn diese zu dicht beieinander liegen. Dieser Effekt erfordert somit die Einhaltung eines gewissen Mindestabstands zwischen den Faserkernen. Aus diesen Gründen besteht das Bedürfnis, die im radialen Querschnitt der Mehrkernfaser zur Verfügung stehende Querschnittsfläche möglichst vollständig für die Belegung mit den Mehrfachkernen zu nutzen.

Darüber hinaus sind Markerzonen stets Störstellen in der Mehrkernfaser, die grundsätzlich so klein wie möglich aber so groß wie nötig sein sollten, um ihre Detektierbarkeit zu gewährleisten. Eine geringe Größe der Markerzonen ist auch vorteilhaft, um anderen unerwünschten Effekten entgegenzuwirken, wie beispielsweise dem sogenannten Faser-Curl oder in der Faser induzierten Spannungen.

Die in das Faser-Design zusätzlich einzufügenden Markerzonen sollten daher einen möglichst kleinen Anteil am Faserquerschnitt einnehmen. Der Durchmesser des Kanals zur Aufnahme des Markerelements ist daher gering und in der Regel deutlich kleiner als der Durchmesser der Bohrungen für die Aufnahme der Kernstäbe. Typischerweise liegt der Kanal-Durchmesser im Mantelglas-Zylinder vor dem Faserziehprozess bei weniger als 15mm, einhergehend mit einem Aspektverhältnis oberhalb von 65 (bei einer Zylinderlänge von etwa 1m).

Die maßgenaue Herstellung und exakte Ausrichtung derartig dünner Kanäle in einem Mantelglas-Zylinder ist selbst bei Einsatz von Hochpräzisions-Bohrmaschinen schwierig. Der Kostenaufwand für die Herstellung des Mantelglas-Zylinders aus synthetischem Quarzglas ist groß und der Verlust besonders schmerzlich, wenn ausgerechnet die kleine Bohrung für die Aufnahme des Markerelements zum Ausschuss des ansonsten fertiggestellten Mantelglas-Zylinders führt.

Erschwerend kommt bei der randnahen Markerstab-Bohrung hinzu, dass eine nur dünne Restwandung verbleibt, die sowohl bei der Herstellung der Durchgangsbohrung als auch bei der weiteren Prozessierung, insbesondere beim Einführen des Markerstabes, leicht zerbrechen kann.

Das Abschleifen des Außenumfangs des Mantelglas-Zylinders gemäß der US 9,541,707 B2 erfolgt bei vollständig mit Kernstäben und Markerstab bestückten Durchgangsbohrungen. Davon abgesehen, dass das Abschleifen mit größter Sorgfalt erfolgen muss und daher einen hohen Zeit- und Kostenaufwand erfordert, besteht in diesem Verfahrensstadium die Gefahr eines Totalverlustes.

Der Erfindung liegt daher die Aufgabe zugrunde, ein Verfahren zur Herstellung von Mehrkernfasern mit randnaher Markerzone anzugeben, bei dem die Gefahr von Ausschuss vermindert ist.

Weiterhin liegt der Erfindung die Aufgabe zugrunde, ein zur Durchführung des Verfahrens geeignetes Halbzeug bereitzustellen.

### Allgemeine Beschreibung der Erfindung

Hinsichtlich des Verfahrens wird diese Aufgabe ausgehend von dem eingangs genannten Verfahren erfindungsgemäß dadurch gelöst, dass das Markerelement an der Außenmantelfläche des Mantelglas-Zylinders angeordnet wird.

Das Anordnen des Markerelements an der Außenmantelfläche des Mantelglas-Zylinders umfasst beispielsweise das Anbringen eines Markerelements in Form eines Bauteils an der Außenmantelfläche und das Auftragen, Abscheiden oder Anpressen eines Markerelements in Form einer Schicht oder Masse auf der Außenmantelfläche. Diese Verfahrensweise hat mehrere Vorteile gegenüber dem Stand der Technik:
(1) Der Aufwand zum Erzeugen einer Bohrung in den Mantelglas-Zylinder entfällt ebenso wie das damit einhergehende Ausfallrisiko.
(2) Das Markerelement liegt von Anfang an frei an der Außenmantelfläche. Im Gegensatz zu dem aus der US 9,541,707 B2 bekannten Verfahren entfallen daher auch der Aufwand und das Ausfallrisiko zum Entfernen von Mantelglasmaterial und Freilegen des Markerglases.
(3) Dadurch, dass das Markerelement an die Außenmantelfläche angrenzt, wird eine achsenparallele Ausrichtung des Markerelements erreicht. Die Maßhaltigkeit und die Geradheit der Außenmantelfläche des Mantelglas-Zylinders ist vergleichsweise einfach zu gewährleisten. Beispielsweise durch mechanische Bearbeitung oder durch einen Elongierprozess, durch den ein Ausgangszylinder zu einem Zylinderstrang elongiert wird, aus dem der Mantelglas-Zylinder erzeugt wird oder aus dem mehrere Mantelglas-Zylinder abgelängt werden. Der Elongierprozess erfolgt vorzugsweise ohne Einsatz eines Formwerkzeugs, das am abgezogenen Zylinderstrangs angreift, um Beschädigungen der Oberfläche zu vermeiden.
(4) Auf die Erzeugung einer Bohrung zur Aufnahme des Markerelements kann verzichtet werden. Die Anordnung an der Außenmantelfläche erlaubt besonders kleine Markerelemente mit beinahe beliebig großen Aspektverhältnissen.
(5) Beim Spleißprozess kann der randnahe Marker vergleichsweise einfach optisch erfasst werden.
(6) Die azimutale Ausrichtungsgenauigkeit der Mehrkernfaser für den Spleißprozess ist hoch, da die randständige Position des Markers besonders empfindlich auf Winkelabweichungen reagiert.

Somit wird das Bauteil-Ensemble mit einem Markerelement ausgestattet, ohne dass dafür eine separate Bohrung im Mantelglas-Zylinder - verbunden mit den oben erläuterten Risiken und Schwierigkeiten - erzeugt werden muss. Gleichzeitig kann eine hohe Genauigkeit gewährleistet werden, die sich beispielsweise in der Vorform beziehungsweise im Bauteil-Ensemble darin manifestiert, dass die Achsenparallelität des Markerelements eine Abweichung von weniger als 0,3mm/m hat.

Bei einer Verfahrensweise liegt das Markerelement als Stab vor, der sich parallel zu der Außenmantelfläche des Mantelglas-Zylinders erstreckt.

Bei einer weiteren Verfahrensweise liegt das Markerelement als Schicht vor, die im Bereich des Außenmantels des Mantelglas-Zylinders angebracht ist.

In den Mantelglas-Zylinder werden in üblicher Weise zwei oder mehr, beispielsweise vier bis sieben Längsbohrungen (Kernstab-Bohrungen) eingebracht, deren Längsachsen parallel zur Längsachse der Mittenbohrung verlaufen. Die Kernstab-Bohrungen sind Durchgangsbohrungen oder Sacklochbohrungen und dienen zur Aufnahme von jeweils mindestens einem Kernstab aus dem Kernglas. Die Zusammensetzung des Kernglases ist in radialer Richtung gesehen gleichbleibend homogen oder sie ändert sich graduell oder stufenweise. Sie unterscheidet sich von der des Mantelglases so, dass eine Lichtführung im Kernglasbereich gewährleistet wird.

Die gewünschte Anzahl an Kernstab-Bohrungen wird entweder in einem Arbeitsgang erzeugt und jeweils mit mindestens einem Kernstab belegt. Oder es wird vorab nur eine Kernstab-Bohrung oder nur ein erster Anteil der gewünschten Anzahl an Kernstab-Bohrungen erzeugt, diese jeweils mit mindestens einem Kernstab belegt, und die mit den Kernstäben belegten Kernstab-Bohrungen werden kollabiert (dieser Umformprozess wird hier auch als "Konsolidierung" bezeichnet), bevor in einem zweiten oder weiteren Arbeitsgang der restliche Anteil oder ein weiterer Anteil der Kernstab-Bohrungen erzeugt wird, und auch dieser Anteil jeweils mit mindestens einem Kernstab belegt und gegebenenfalls kollabiert wird. Im einfachsten Fall haben alle Kernstäbe die gleichen Abmessungen und bestehen aus dem gleichen Kernglas. Die Kernstäbe können sich aber auch in ihren Abmessungen und/oder in der Zusammensetzung des jeweiligen Kernglases unterscheiden.

Das Anordnen des Markerelements an der Außenmantelfläche kann erfolgen bevor oder nachdem alle Kernstab-Bohrungen erzeugt und/oder gefüllt worden sind, oder es kann erfolgen bevor oder nachdem ein Teil der Kernstab-Bohrungen erzeugt und/oder gefüllt worden sind. Bei einer bevorzugten Verfahrensweise wird das Markerelement an der Außenmantelfläche angeordnet, anschließend werden die gewünschten Kernstab-Bohrungen erzeugt.

Das so hergestellte Bauteil-Ensemble wird umgeformt und dabei entweder direkt zu der Mehrkernfaser gezogen oder es wird zu einer Vorform für die Mehrkernfaser konsolidiert, wobei das Konsolidieren mit einem gleichzeitigen Elongieren einhergehen kann. Die so erzeugte "konsolidierte Vorform" wird gegebenenfalls zu der Mehrkernfaser gezogen oder sie wird zu einer "sekundären Vorform" weiterverarbeitet. Die Weiterverarbeitung zur "sekundären Vorform" umfasst beispielsweise das Erzeugen weiterer Bohrungen im Mantelglasbereich und deren Belegung mit Kernglas oder mit anderen Gläsern oder die einmalige oder wiederholte Durchführung von einem oder mehreren der folgenden Heißformprozesse: Aufkollabieren von zusätzlichem Mantelmaterial, Kollabieren, Elongieren, Kollabieren und gleichzeitiges Elongieren. Aus der durch die Weiterverarbeitung erzeugten sekundären Vorform wird die Mehrkernfaser gezogen.

Durch die randnahe Positionierung der Markerzone können Faserspleiß-Geräte den die Markerzone schneller und genauer identifizieren. Aufgrund der vergleichsweise einfachen Detektierbarkeit der randnahen Markerzone kann diese besonders klein ausfallen, so dass der Mehrkernfaser beim Faserziehprozess ein vergleichsweise geringes Faser-Curl aufgeprägt wird. Als "Faser-Curl" wird eine Eigenschaft von Glasfasern bezeichnet, die als Krümmungsgrad über eine bestimmte Länge der Faser definiert ist. Die Krümmung resultiert aus thermischen Spannungen, die während der Faserherstellung entstehen. Eine hohes "Faser-Curl" erschwert das dämpfungsarme Spleißen der Mehrkernfaser.

Bei einer bevorzugten Verfahrensweise wird in der Außenmantelfläche des Mantelglasbereichs eine sich in Richtung der Zylinder-Längsachse erstreckende Ausnehmung erzeugt wird, in der das Markerelement angeordnet wird.

Die Ausnehmung wird vorzugsweise als Längsrille (Längsnut) an der Außenmantelfläche des Mantelglas-Zylinders ausgeführt. Denn zum einen ist eine Längsrille in der Außenmantelfläche im Vergleich zu einer Bohrung besonders einfach zu fertigen; beispielsweise durch Fräsen mittels mechanischem Fräser oder durch Laserablation. Zum anderen ist die so erzeugte Längsrille genauso so exakt und gerade wie der Mantelglas-Zylinder selbst. Und darüber hinaus können die Tiefe beziehungsweise die Öffnungsweite der Längsrille fast beliebig klein gehalten werden; beispielsweise beides weniger als 15mm, vorzugsweise weniger als 10mm und besonders bevorzugt weniger als 5mm. Durch Füllen der Längsrille mit dem Markerglas sind somit sind auf einfache Weise geometrisch exakte Markerelemente mit geringem Volumen herstellbar, die in der Vorform beziehungsweise im Bauteil-Ensemble eine Abweichung ihrer axialen Ausrichtung von weniger als 0,3mm/m haben und die demgemäß in der Mehrkernfaser entsprechend kleine und hochgenaue Markerzonen ausbilden. Das Füllen der Längsrille mit dem Markerelement erfolgt beispielsweise durch Einlegen eines zylinderförmigen Bauteils (Stab oder Rohr) aus einem Markerglas oder durch Einbringen einer Schüttung von Teilchen aus dem Markerglas oder durch Innenbeschichtung der Längsrille mit dem Markerglas. Das zylinderförmige Bauteil beziehungsweise die Schüttung oder Schicht aus dem Markerglas kann in der Längsrille zusätzlich durch Verschmelzen fixiert werden. Bei einem Markerelement in Form eines Rohres kann die Rohrwandung ein Material enthalten, das eine höhere Viskosität aufweist als das Mantelglas, so dass beim Faserziehprozess die Bohrung nicht vollständig kollabiert und in der fertigen Mehrkernfaser als Hohlraum ("Airline") erhalten bleibt.

Die Ausnehmung gewährleistet einen Formschluss zwischen Markerelement und Mantelglas-Zylinder. Markerelement und Mantelglas-Zylinder können auch vorab (das heißt: vor dem Einbringen der Kernstäbe in die Kernstab-Bohrungen) durch Stoffschluss miteinander verbunden werden, beispielsweise durch Zusammensintern oder Verschmelzen.

Das Markerglas füllt die Ausnehmung vollständig oder teilweise aus. Bei einer besonders bevorzugten Verfahrensvariante wird zur Herstellung der Längsrille Mantelglas mit einem Mantelglas-Volumen V_{M} aus dem Mantelglas-Zylinder entfernt, wobei in der Längsrille ein Markerelement mit einem Volumen V_{E} aufgenommen wird, wobei gilt: V_{E} = V_{M} +/- 0,1xV_{M}.

Das Markerglas-Volumen ist dabei so bemessen, dass das Markerglas im schmelzflüssigen Zustand das Öffnungsvolumen der Ausnehmung möglichst vollständig und im Idealfall exakt ausfüllt. Dadurch werden Asymmetrien beim Faserziehprozess möglichst vermieden. Die Querschnittskonturen der Ausnehmung und des Markerelements müssen dafür nicht übereinstimmen. Die Ausnehmung hat aber bevorzugt einen runden Boden und das Markerelement einen daran angepassten runden Querschnitt mit einem geringfügig kleineren Radius.

Bei einer bevorzugten Verfahrensweise umfasst die Herstellung des Bauteil-Ensembles folgende Verfahrensschritte:
Verfahren nach einem der vorhergehenden Ansprüche, dadurch gekennzeichnet, dass die Herstellung des Bauteil-Ensembles folgende Verfahrensschritte umfasst:
(a) Bereitstellen des Mantelglas-Zylinders, der das Mantelglas enthält,
(b) Bereitstellen von Kernstäben, die das Kernglas enthalten,
(c) Bereitstellen eines Markerelements,
(d) Erzeugen von Kernstab-Bohrungen, die sich entlang der Zylinder-Längsachse erstrecken,
(e) Einbringen der Kernstäbe in die Kernstab-Bohrungen unter Bildung der Kernglasbereiche, und
(f) Anordnen des Markerelements an der Außenmantelfläche des Mantelglas-Zylinders.

Das so erzeugte Bauteil-Ensemble umfasst den Mantelglas-Zylinder, den Füllstab, das Markerelement und mindestens zwei Kernstäbe. Die Listenbezeichnungen (a) bis (f) geben keine Reihenfolge der Verfahrensschritte vor.

Das Markerelement wird vorzugsweise am Mantelglas-Zylinder angebracht. Durch das Anbringen am Mantelglas-Zylinder profitiert das Markerelement von dessen Geradheit und Ausrichtung; diese Eigenschaften werden quasi auf das Markerelement übertragen. Das Anbringen beruht beispielsweise auf Reibschluss, Stoffschluss und/oder Formschluss zwischen Füllstab und Markerelement. Das Markerelement erstreckt sich entlang des Zylinder-Längsachse des Mantelglas-Zylinders und bevorzugt über dessen gesamte Länge.

Das Markerelement wird vorzugsweise in Form eines zylinderförmigen Bauteils oder in Form einer mit dem Füllstab verbundenen Schicht oder Glasmasse bereitgestellt.

Das mindestens eine zylinderförmige Bauteil ist beispielsweise ein Rohr und bevorzugt ein Stab.

Das Markerglas unterscheidet sich vorzugsweise in mindestens einer physikalischen und/oder chemischen Eigenschaft vom Mantelglas und von einem etwaigen Glas-Füllmaterial, wobei die Eigenschaft ausgewählt ist aus: Brechungsindex, Farbe, Fluoreszenz und/oder spezifischer Glasdichte.

Die Eigenschaft (beziehungsweise die Eigenschaften), die das Markerelement von den Gläsern des Bauteil-Ensembles unterscheidet, wirkt sich insbesondere auf die optischvisuelle Erscheinung des Markerelements aus und ist vorzugsweise mittels eines optischen Sensors erfassbar. Die Glaszusammensetzung eines Markerglases kann - so wie beispielsweise auch das Glas-Füllmaterial - auf Quarzglas basieren. Durch Dotierung kann der Brechungsindex von Quarzglas verändert werden. So bewirkt beispielsweise die Dotierung eines Marker-Quarzglases mit Fluor eine Absenkung des Brechungsindex gegenüber undotiertem Quarzglas. Eine Einlagerung von Kohlenstoff in das Marker-Quarzglas kann zu einer Schwarzfärbung führen. Eine Dotierung des Marker-Quarzglases mit Titan bewirkt je nach Oxidationszustand eine Grau-Blaufärbung. Eine Dotierung des Marker-Quarzglases mit Seltenerdmetallen oder Germaniumoxid äußert sich in einer Fluoreszenz bei Dotierstoff-spezifischen Wellenlängen. Die spezifische Glasdichte des Markerelements ist durch Poren veränderbar und äußert sich in einer Verringerung der optischen Transparenz gegenüber blasenfreiem Glas.

Bevorzugt ist der Mantelglas-Zylinder ein eine Mittenbohrung aufweisender Hohlzylinder.

Derartige Hohlzylinder werden beispielsweise anhand des OVD-Verfahrens (Outside Vapor Deposition) erhalten, nachdem der Abscheidedorn entfernt worden ist. Die Herstellung von Mantelglas-Hohlzylindern nach dem OVD-Verfahren ist kostengünstig im Vergleich zu anderen Herstellungsmethoden, insbesondere im Vergleich zum VAD-Verfahren (Vapor Phase Axial Deposition). Sie geht allerdings mit dem Nachteil einher, dass die erwähnte zentrale Mittenbohrung verbleiben kann. Diese kann vollständig oder teilweise mittels eines Kernstabs oder eines Glasstabs, der ein anderes Glas-Füllmaterial enthält, verschlossen werden.

Hinsichtlich des Halbzeugs wird die oben genannte technische Aufgabe durch ein Halbzeug mit den Merkmalen von Anspruch 10 gelöst.

Das erfindungsgemäße Halbzeug umfasst einen Mantelglas-Zylinder, dessen Außenmantelfläche eine sich in Richtung der Zylinder-Längsachse erstreckende Ausnehmung zur Aufnahme eines Markerelements aufweist.

Die Ausnehmung bildet vorzugsweise eine Längsrille (Längsnut) an der Außenmantelfläche des Mantelglas-Zylinders. Eine Längsrille in der Außenmantelfläche ist im Vergleich zu einer Bohrung besonders einfach zu fertigen; beispielsweise durch Fräsen mittels mechanischem Fräser oder durch Laserablation. Zum anderen ist die so erzeugte Längsrille genauso so exakt und gerade wie der Mantelglas-Zylinder selbst. Und darüber hinaus können die Tiefe beziehungsweise die Öffnungsweite der Längsrille fast beliebig klein gehalten werden; beispielsweise beides weniger als 15mm, vorzugsweise weniger als 10mm und besonders bevorzugt weniger als 5mm.

Die Ausnehmung (Längsrille) ist zur Aufnahme eines Markerelements mit geringem Volumen ausgelegt, das eine Abweichung seiner axialen Ausrichtung von weniger als 0,3mm/m hat und demgemäß in der aus dem Halbzeug erhaltenen Mehrkernfaser entsprechend kleine und hochgenaue Markerzonen ausbildet.

Bevorzugt ist der Mantelglas-Zylinder ein eine Mittenbohrung aufweisender Hohlzylinder.

Derartige Hohlzylinder werden beispielsweise anhand des OVD-Verfahrens (Outside Vapor Deposition) erhalten, nachdem der Abscheidedorn entfernt worden ist. Die Herstellung von Mantelglas-Hohlzylindern nach dem OVD-Verfahren ist kostengünstig im Vergleich zu anderen Herstellungsmethoden, insbesondere im Vergleich zum VAD-Verfahren (Vapor Phase Axial Deposition). Sie geht allerdings mit dem Nachteil einher, dass die erwähnte zentrale Mittenbohrung verbleiben kann. Diese kann vollständig oder teilweise mittels eines Kernstabs oder eines Glasstabs, der ein anderes Glas-Füllmaterial enthält, verschlossen werden.

Das Halbzeug ist zur Durchführung des erfindungsgemäßen Verfahrens vorgesehen und dafür geeignet und ausgelegt. Die auf den Mantelglas-Zylinder bezogenen Erläuterungen im Zusammenhang mit dem erfindungsgemäßen Verfahren treffen auch auf das Halbzeug zu und werden hiermit einbezogen.

### Definitionen und Messmethoden

Einzelne Begriffe der obigen Beschreibung werden im Folgenden ergänzend definiert. Die Definitionen sind Bestandteil der Beschreibung der Erfindung. Für Begriffe und Messerverfahren, die in der Beschreibung nicht speziell definiert sind, ist die Auslegung gemäß der Internationalen Fernmeldeunion (ITU; International Telecommunication Union) maßgeblich. Bei einem Widerspruch zwischen einer der folgenden Definitionen und der übrigen Beschreibung ist das in der übrigen Beschreibung Gesagte maßgeblich.

### Mantelglas-Zylinder / Mantelglasbereich

Der Mantelglas-Zylinder ist langgestreckt und hat im Wesentlichen Zylinderform. Im Bereich der stirnseitigen Enden können Abweichungen von der Zylinderform vorhanden sein. Er ist als Vollzylinder oder als Hohlzylinder ausgebildet. Er enthält ein Mantelglas, das den Mantelglasbereich bildet. Das Mantelglas besteht beispielsweise aus undotiertem Quarzglas oder es enthält mindestens einen den Brechungsindex von Quarzglas absenkenden Dotierstoff. Fluor und Bor sind Dotierstoffe, die den Brechungsindex von Quarzglas absenken können.

### Kernstäbe / Kernglasbereich

Die Kernstäbe enthalten ein Kernglas, das in radialer Richtung einen homogenen oder einen nicht-homogenen Brechungsindex-Verlauf aufweist. Das Kernglas von jedem der Kernstäbe bildet einen Kernglasbereich. Die Kernstäbe können einen Bereich aus einem Kernglas mit einem vergleichsweise hohen Brechungsindex und mindestens einen weiteren Bereich aus einem anderen Glas mit einem vergleichsweise niedrigen Brechungsindex enthalten; beispielsweise ein Quarzglas, das mit Fluor und/oder Chlor dotiert ist. Das Glas mit dem höchsten Brechungsindex befindet sich in der Regel in der zentralen Achse des Kernstabs. Es besteht beispielsweise aus Quarzglas, dem mindestens ein Dotierstoff zur Erhöhung des Brechungsindex zugesetzt ist. In der Mehrkernfaser bildet der Kernstab mindestens einen Signalkern aus, in dem das zu übertragende Signal hauptsächlich transportiert wird. Der Signalkern kann an andere Glasbereiche mit kleinerem Brechungsindex angrenzen, die ebenfalls vom Kernstab bereitgestellt worden sind.

### Markerelement/ Markermaterial / Markerglas

Das Markerelement enthält Luft und/oder ein Markermaterial; insbesondere mindestens ein Markerglas. Die Zusammensetzung des Markerglases unterscheidet sich von der des Mantelglases und/oder die Dichte des Markerglases unterscheidet sich von der des Mantelglases. Das Markerelement liegt in der Vorform und im Bauteil-Ensemble als Bauteil oder als Schicht oder Masse auf einem Bauteil vor und bildet in der Mehrkernfaser eine optisch detektierbare Markerzone.

### Bauteil-Ensemble / konsolidierte Vorform / sekundäre Vorform

Das "Bauteil-Ensemble" umfasst den Mantelglas-Zylinder mit darin eingesetzten Kernstäben und das mindestens eine Markerelement. Durch Fixieren der Kernstäbe in den Kernstab-Bohrungen; beispielsweise durch Verengung eines Mantelglas-Zylinder-Endes oder durch Kollabieren und Verschmelzen, wird eine "Vorform" erhalten, die hier auch als "konsolidierte Vorform" bezeichnet wird. Das Bauteil-Ensemble oder die (konsolidierte) Vorform werden zu einer "sekundären Vorform" oder direkt zu der Mehrkernfaser elongiert. Unter dem Begriff "Halbzeug" werden hier das Bauteil-Ensemble, die konsolidierte Vorform und die sekundäre Vorform subsumiert.

### Quarzglas

Quarzglas ist beispielsweise aus natürlich vorkommendem SiO₂-Rohstoff erschmolzen (natürliches Quarzglas), oder es ist synthetisch erzeugt (synthetisches Quarzglas) oder es besteht aus Mischungen dieser Quarzglassorten. Synthetisches, transparentes Quarzglas wird beispielsweise durch Flammenhydrolyse oder Oxidation synthetisch erzeugter Siliziumverbindungen, durch Polykondensation organischer Siliziumverbindungen nach dem so genannten Sol-Gel-Verfahren oder durch Hydrolyse und Fällung anorganischer Siliziumverbindungen in einer Flüssigkeit erhalten.

### Verschmelzen

Im Zusammenhang mit Bauteilen aus Glas ist unter Verschmelzen zu verstehen, dass die Bauteile an einer Kontaktfläche miteinander verschmolzen sind. Das Verschmelzen erfolgt durch Aufheizen der Bauteile mindestens im Bereich der Kontaktfläche mittels einer Heizquelle, wie einem Ofen, einem Brenner oder einem Laser.

### Positionsangaben: oben / unten

Die Angaben beziehen sich auf Positionen beim Elongierprozess beziehungsweise beim Faserziehprozess. "Unten" bezeichnet die Position in Ziehrichtung, "Oben" die Position entgegen der Ziehrichtung.

### Querschnitt

Den Schnitt senkrecht zur Längsrichtung/Längsachse.

### Längsschnitt

Einen Schnitt parallel zur Längsrichtung/Längsachse.

### Bohrung

Die Begriffe "Bohrung", "Mittenbohrung", "Innenbohrung" oder "Längsbohrung" bezeichnen Löcher mit beliebiger Innengeometrie. Sie werden beispielsweise durch einen Bohrvorgang erzeugt oder sie entstehen, indem durch einen Abscheideprozess oder einen Pressvorgang auf der Außenmantelfläche eines Dorns eine Materialschicht abgelagert wird und der Dorn anschließend entnommen wird.

### Ausführungsbeispiel

Nachfolgend wird die Erfindung anhand eines Ausführungsbeispiels und einer Zeichnung näher erläutert. Im Einzelnen zeigt in schematischer Darstellung
- **Figur 1**: einen Querschnitt eines Mantelglas-Vollzylinders mit einer Längsrille an der Außenmantelfläche und Durchgangsbohrungen,
- **Figur 2**: ein Bauteil-Ensemble aus Mantelglas-Vollzylinder von Figur 1, in die Kernstab-Bohrungen eingesetzten Kernstäben und in die Längsrille eingefügtem Markerelement,
- **Figur 3**: einen Querschnitt einer konsolidierten Vorform aus Mantelglas-Vollzylinder, Markerelement und Kernstäben,
- **Figur 4**: einen Querschnitt einer konsolidierten Vorform aus Mantelglas-Hohlzylinder, Markerelement und Kernstäben, und
- **Figur 5**: einen Querschnitt eines Mantelglas-Hohlzylinders mit einer Mittelbohrung sowie Durchgangsbohrungen für die Aufnahme von Kernstäben.

### Beispiel 1

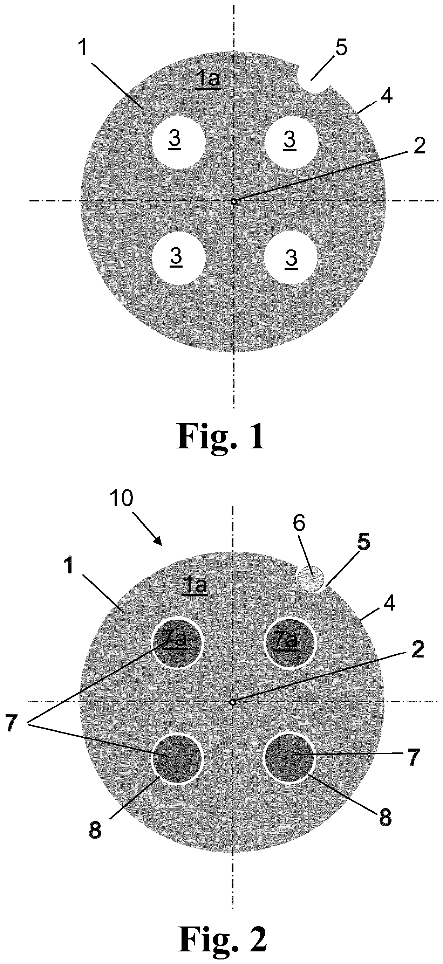

**Figur 1** zeigt schematisch einen Querschnitt eines Zylinders 1 aus einem Mantelglas, der als Basiskörper für die Herstellung einer Mehrkernfaser dient. Der Mantelglas-Zylinder 1 besteht aus nicht dotiertem, synthetisch erzeugtem Quarzglas. Das Quarzglas bildet einen Mantelglasbereich 1a. Der Mantelglas-Zylinder 1 hat eine Länge von 1500mm und wird durch Rundschleifen auf einen nominalen Außendurchmesser von 200mm eingestellt. Am Zylinder-Außenmantel 4 wird eine Längsnut 5 erzeugt. Vier Bohrungen 3 werden in einer vorbestimmten (hier quadratischen) Konfiguration durch mechanisches Bohren in Richtung der Zylinder-Längsachse 2 erzeugt, die in der Darstellung von Figur 1 senkrecht zur Blattebene verläuft. Die Bohrungen 3 dienen zur Aufnahme von Kernstäben (Figur 2) und haben einen Durchmesser von 24mm. Die Bohrungen 3 erstrecken sich durch den gesamten Zylinder 1 (Durchgangsbohrungen). Bei einer alternativen Ausführungsform sind die Bohrungen als Sacklochbohrungen ausgeführt.

Die am Zylinder-Außenmantel 4 eingefräste Längsnut 5 erstreckt sich über die gesamte Länge des Mantelglas-Zylinders 1. Sie ist im Querschnitt halbkreisförmig mit einer Öffnungsweite von 10mm und einer Tiefe von 5mm.

**Figur 2** zeigt ein Bauteil-Ensemble 10 aus Mantelglas-Zylinder 1, Kernstäben 7 und einem in die Längsnut 5 eingelegten Markerstab 6. Der Markerstab 6 hat ebenfalls eine Länge von 1500mm, und sein Durchmesser beträgt 3,5mm. Es besteht aus synthetisch erzeugtem Quarzglas, das mit Fluor dotiert ist und im Handel unter der Bezeichnung F320 erhältlich ist. Sowohl die Viskosität als auch der Brechungsindex des Fluordotierten Quarzglases des Markerstabs 6 sind kleiner als beim undotierten Quarzglas, aus dem der Zylinder 1 besteht. Der Markerstab 6 wird erhalten, indem ein Ausgangszylinder aus dem F320-Quarzglas in einem werkzeugfreien Verfahren elongiert wird. Er hat eine glatte und im Schmelzfluss erzeugte, schädigungsfreie Oberfläche und zeichnet sich durch eine hohe Maßhaltigkeit und Geradheit aus, so dass er sich ohne Schwierigkeiten in die Längsnut 5 einlegen lässt. Der in die Längsnut 5 eingelegte Markerstab 6 wird durch punktuelles Erhitzen mittels eines Brenners in der Längsnut 5 fixiert.

Außerdem werden im Ausführungsbeispiel vier Kernstäbe 7 aus Germanium-dotiertem Quarzglas mit einer Länge von etwa 1500mm und einem Außendurchmesser von etwa 22mm hergestellt. Dafür sind ebenfalls bekannte Techniken geeignet, beispielsweise das MCVD-Verfahren (Modified Chemical Vapor Deposition). Figur 2 zeigt schematisch, die in die Bohrungen 3 eingesetzten Kernstäbe 7. Das Kernglas der Kernstäbe 7 bildet einen Kernglasbereich 7a. Anschließend wird das untere Ende des mit den Kernstäben 7 bestückten Mantelglas-Zylinders 1 erhitzt, so dass die Ringspalte 8 um die Kernstäbe 7 kollabieren und das Fluor-dotierte Quarzglas des Markerstabes 6 aufschmilzt und sich in der Längsnut 5 verteilt. Das Glasvolumen des ehemaligen Markerstabs 6 ist auf das Innenvolumen der Längsnut 5 so abgestimmt, dass das Markerglas 11 die Längsnut 6 gerade vollständig ausfüllt.

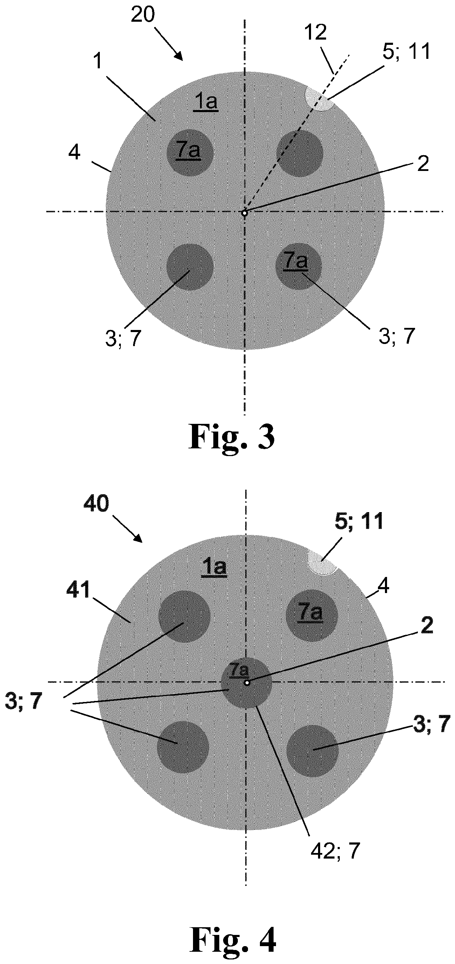

**Figur 3** zeigt schematisch die so konsolidierte Vorform 20 aus den ehemaligen Ensemble-Bauteilen: Mantelglas-Zylinder 1, Kernstäbe 7, Markerstab 6, der in der Vorform die Markerglasmasse 11 bildet. Diese liegt frei am Zylinder-Außenmantel 4 und auf einer vom Mittelpunkt radial nach außen verlaufenden Linie 12, die zu keiner Symmetrieachse des Faserdesigns gehört.

Die konsolidierte Vorform 20 wird anschließend zu einer sekundären Vorform elongiert. Dabei wird die Vorform 20 in einer Elongier-Vorrichtung mittels eines Halters in vertikaler Ausrichtung der Zylinder-Längsachse 2 gehalten. Die so erzeugte sekundäre Vorform wird abschließend in üblicher Weise in einer Ziehvorrichtung zu einer Mehrkernfaser 20 gezogen. Deren Querschnitt entspricht im Wesentlichen, abgesehen von den kleineren radialen Abmessungen, dem Querschnitt der in Figur 3 gezeigten konsolidierten Vorform 20. Die ehemaligen Kernstäbe 7 bilden Signalkerne, die sich längs der Faser-Längsachse erstrecken; und die ehemalige Markerglasmasse 11 bildet eine Markerzone an der Zylindermantelfläche der Mehrkernfaser. Die Mehrkernfaser zeichnet sich durch ein besonders geringes Faser-Curl und durch ein besonders gutes Spleißverhalten aus.

### Beispiel 2

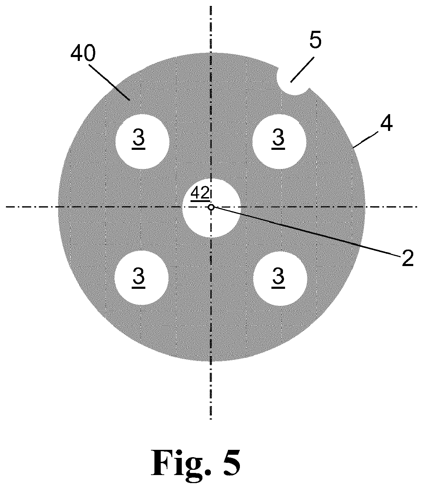

Soweit in den Figuren 4 und 5 die gleichen Bezugsziffern verwendet werden wie in den Figuren 1 bis 3, so sind damit identische oder äquivalente Bauteile oder Bestandteile des Halbzeugs bezeichnet, wie sie oben anhand Beispiel 1 näher erläutert sind.

**Figur 5** zeigt schematisch einen Querschnitt eines Mantelglas-Hohlzylinders 41, der in bekannter Weise anhand der OVD-Methode hergestellt wird. Bei diesem Verfahren werden SiO₂-Sootpartikel gebildet, indem ein hochreines SiO₂-Ausgangsmaterial, beispielsweise Siliciumtetrachlorid, durch einen Abscheidebrenner geleitet und einer Brennerflamme zugeführt wird, in der daraus festes SiO₂ gebildet wird. Dieses wird in Form feiner SiO₂-Sootpartikel auf der Außenmantelfläche eines um seine Längsachse rotierenden, zylinderförmigen Abscheidedorns aus der Gasphase abgeschieden, wobei der Abscheidebrenner eine reversierende Hin- und Herbewegung entlang der Abscheidedorn-Längsachse ausführt. Auf der Außenmantelfläche des Abscheidedorns bildet sich ein SiO₂-Sootkörper. Nach Abschluss des Abscheideprozesses wird der Abscheidedorn entfernt, so dass eine zentrale Innenbohrung 42 zurückbleibt. Der SiO₂-Sootkörper wird anschließend in einem Ofen unter Vakuum verglast, wobei die zentrale 42 Innenbohrung nicht kollabiert, also beibehalten wird.

Der so erhaltene Hohlzylinder 42 besteht aus nicht dotiertem, synthetisch erzeugtem Quarzglas. Er hat eine Länge von 1500mm und wird durch Rundschleifen auf einen Außendurchmesser von 200mm und einen Innendurchmesser von 42mm eingestellt. Durch mechanisches Bohren in Richtung der Längsachse 2 werden um die zentrale Innenbohrung 42 vier gleichmäßig verteilte weitere Bohrungen 3 mit einem Durchmesser von 42mm erzeugt.

Am Zylinder-Außenmantel 4 wird eine Längsnut 5 eingefräst, die sich über die gesamte Länge des Mantelglas-Zylinders 41 erstreckt und die im Querschnitt halbkreisförmig ist und eine Öffnungsweite von 10mm und eine Tiefe von 5mm hat.

Der Mantelglas-Hohlzylinder 41 dient als Halbzeug für die Herstellung einer Mehrkernfaser, wobei die zentrale Innenbohrung 42 des Mantelglas-Hohlzylinders 41 im weiteren Verlauf dieses Herstellungsverfahrens mit einem Füllstab aus dem Mantelglas oder aus einem anderen Glasmaterial gefüllt wird, oder sie wird - wie in diesem Ausführungsbeispiel - mit einem zentralen Kernstab gefüllt.

**Figur 4** zeigt schematisch eine unter Einsatz des Mantelglas-Hohlzylinders 41 von Figur 5 konsolidierte Vorform 40.

In die Längsnut 5 wird ein Markerstab aus synthetisch erzeugtem Quarzglas, das mit Fluor dotiert ist und das im Handel unter der Bezeichnung F520 erhältlich ist, eingelegt. Der Markerstab hat ebenfalls eine Länge von 1500mm, und sein Durchmesser beträgt 3,5mm. Er wird durch Elongieren eines Ausgangszylinders aus dem F520-Quarzglas in einem werkzeugfreien Verfahren erhalten und hat eine glatte und im Schmelzfluss erzeugte, schädigungsfreie Oberfläche. Er zeichnet sich durch eine hohe Maßhaltigkeit und Geradheit aus, so dass er sich ohne Schwierigkeiten in die Längsnut einlegen lässt. Der in die Längsnut eingelegte Markerstab wird durch punktuelles Erhitzen mittels eines Brenners in der Längsnut fixiert.

In die zentrale Innenbohrung 42 und in die weiteren Bohrungen 3 werden fünf jeweils gleiche Kernstäbe 7 mit einem Durchmesser von 40mm eingesetzt. Anschließend wird das untere Ende des mit den Kernstäben bestückten Mantelglas-Zylinders 41 erhitzt, so dass die Ringspalte um die Kernstäbe 7 kollabieren und das Fluor-dotierte Quarzglas des Markerstabes aufschmilzt und sich in der Längsnut 5 verteilt und diese vollständig auffüllt.

Die so konsolidierte Vorform 40 besteht aus den ehemaligen Ensemble-Bauteilen: Mantelglas-Hohlzylinder 41, der den Mantelglasbereich 1a bildet, Kernstäbe, die die Kernglasbereiche 7a bilden und Markerstab, der in der Vorform 40 die Markerglasmasse 11 bildet. Sie wird anschließend zu einer sekundären Vorform elongiert, die abschließend in üblicher Weise in einer Ziehvorrichtung zu einer Mehrkernfaser gezogen wird. Die randnahe Markerzone ist besonders exakt und hat ein kleines Volumen, so dass sich die Mehrkernfaser durch ein besonders geringes Faser-Curl und durch ein besonders gutes Spleißverhalten auszeichnet.

## Patentansprüche

1. Verfahren zur Herstellung einer Mehrkernfaser, umfassend einen Verfahrensschritt, bei dem ein Bauteil-Ensemble (10) zu der Mehrkernfaser oder zu einer Vorform (20; 40) für die Mehrkernfaser umgeformt wird, wobei das Bauteil-Ensemble (10) aufweist:
• einen eine Zylinder-Längsachse (2) und eine Außenmantelfläche (4) aufweisenden Mantelglas-Zylinder (1; 41), der einen Mantelglasbereich (1a) aus Mantelglas aufweist,
• mehrere mit einem Kernglas belegte und sich in Richtung der Zylinder-Längsachse (2) erstreckende Kernglasbereiche (7a), die von dem Mantelglas umgeben sind,
• und mindestens ein sich in Richtung der Zylinder-Längsachse (2) erstreckendes Markerelement (6),
**dadurch gekennzeichnet, dass** das Markerelement (6) an der Außenmantelfläche (4) des Mantelglas-Zylinders (1; 41) angeordnet wird.

2. Verfahren nach Anspruch 1, **dadurch gekennzeichnet, dass** in der Außenmantelfläche (4) des Mantelglasbereichs (1a) eine sich in Richtung der Zylinder-Längsachse (2) erstreckende Ausnehmung (5) erzeugt wird, in der das Markerelement (6) angeordnet wird.

3. Verfahren nach Anspruch 2, **dadurch gekennzeichnet, dass** die Ausnehmung als Längsrille (5) in der Außenmantelfläche (4) des Mantelglas-Zylinders (1; 41) ausgeführt wird.

4. Verfahren nach Anspruch 3, **dadurch gekennzeichnet, dass** zur Herstellung der Längsrille (5) Mantelglas mit einem Mantelglas-Volumen V_{M} aus dem Mantelglas-Zylinder (1; 41) entfernt wird, und dass in der Längsrille (5) ein Markerelement (6) mit einem Volumen V_{E} aufgenommen wird, wobei gilt: V_{E} = V_{M} +/- 0,1xV_{M}.

5. Verfahren nach einem der vorhergehenden Ansprüche, **dadurch gekennzeichnet, dass** die Herstellung des Bauteil-Ensembles (10) folgende Verfahrensschritte umfasst:
(a) Bereitstellen des Mantelglas-Zylinders (1; 41), der das Mantelglas enthält,
(b) Bereitstellen mindestens von Kernstäben (7), die das Kernglas enthalten,
(c) Bereitstellen eines Markerelements (6),
(d) Erzeugen von Kernstab-Bohrungen (3), die sich entlang der Zylinder-Längsachse (2) erstrecken,
(e) Einbringen der Kernstäbe (7) in die Kernstab-Bohrungen (3) unter Bildung der Kernglasbereiche (7a), und
(f) Anordnen des Markerelements (6) an der Außenmantelfläche (4) des Mantelglas-Zylinders (1; 41).

6. Verfahren nach einem der vorhergehenden Ansprüche, **dadurch gekennzeichnet, dass** das Markerelement (6) am Mantelglas-Zylinder (1; 41) angebracht wird.

7. Verfahren nach einem der vorhergehenden Ansprüche, **dadurch gekennzeichnet, dass** das Markerelement (6) in Form eines zylinderförmigen Bauteils oder in Form einer mit dem Mantelglas-Zylinder (1; 41) verbundenen Schicht oder Glasmasse (11) bereitgestellt wird.

8. Verfahren nach einem der vorhergehenden Ansprüche, **dadurch gekennzeichnet, dass** als Mantelglas-Zylinder (1; 41) ein eine Mittenbohrung (102) aufweisender Hohlzylinder (41) eingesetzt wird, der den Mantelglasbereich aus Mantelglas und mehrere mit einem Kernglas belegte Kernglasbereiche aufweist.

9. Verfahren nach einem oder mehreren der vorhergehenden Ansprüche, **dadurch gekennzeichnet, dass** das Markerglas sich in mindestens einer physikalischen und/oder chemischen Eigenschaft vom Mantelglas unterscheidet, wobei die Eigenschaft ausgewählt ist aus: Brechungsindex, Farbe, Fluoreszenz und/oder spezifischer Glasdichte.

10. Halbzeug zur Herstellung einer Mehrkernfaser, mit einem eine Zylinder-Längsachse (2) und eine Außenmantelfläche (4) aufweisenden Mantelglas-Zylinder (1), der einen Mantelglasbereich aus Mantelglas aufweist, in dem mehrere Öffnungen zur Aufnahme von Kernstäben aus einem Kernglas enthalten sind, **dadurch gekennzeichnet, dass** die Außenmantelfläche (4) des Mantelglas-Zylinders (1) mindestens eine sich in Richtung der Zylinder-Längsachse (2) erstreckende Ausnehmung (5) zur Aufnahme eines Markerelements aufweist.

11. Halbzeug nach Anspruch 10, **dadurch gekennzeichnet, dass** die Ausnehmung (5) als Längsrille ausgebildet ist.

12. Halbzeug nach Anspruch 10 oder 11, **dadurch gekennzeichnet, dass** der Mantelglas-Zylinder ein eine Mittenbohrung aufweisender Hohlzylinder ist.
